# EUROPÄISCHE PATENTSCHRIFT

(11) **EP 4 726 129 B1**
(45) Veröffentlichungstag und Bekanntmachung des Hinweises auf die Patenterteilung: **25.11.2026**
(21) Anmeldenummer: 25182452.0
(22) Anmeldetag: 12.06.2025
(51) Int. Cl.: E04B 1/70, F26B 21/00, F26B 21/20, F16M 11/42, F16M 11/18, F04D 29/60, F04D 25/10, F16M 11/08

(54) **BAUTROCKNUNGSANORDNUNG, INSBESONDERE FÜR IMMOBILIEN**
DRYING CONSTRUCTION ASSEMBLY, IN PARTICULAR FOR REAL ESTATE PROPERTY
ENSEMBLE DE SÉCHAGE DE CONSTRUCTION, EN PARTICULIER POUR IMMOBILIER

(30) Priorität: 11.10.2024 EP 24206182
(43) Veröffentlichungstag der Anmeldung: 15.04.2026
(73) Patentinhaber: Kilic, Selcuk, 47167 Duisburg (DE)
(72) Erfinder: Kilic, Selcuk, 47167 Duisburg (DE)
(74) Vertreter: Osterhoff, Utz

(56) Entgegenhaltungen:
- GB-A- 2 242 017
- US-B2- 11 788 674
- CABLEMATIC: "Base giratoria eléctrica. color blanco con enchufe - distribuido por CABLEMATIC", 8 June 2017 (2017-06-08), XP093254466, Retrieved from the Internet <URL:https://www.youtube.com/watch?v=5SEOm-OrtvE&t=12s> [retrieved on 20250226]

## Beschreibung

Bei der vorliegenden Erfindung handelt es sich um eine Bautrocknungsanordnung, insbesondere für Immobilien gemäß den Merkmalen im Oberbegriff von Anspruch 1. Die vorliegende Erfindung betrifft ferner ein Verfahren zum Tragen der Bautrocknungsanordnung gemäß den Merkmalen im Anspruch 9.

Nach dem aktuellen Stand der Technik ist es bekannt, dass Immobilien, mithin Wohnhäuser sowie auch Lagerhäuser oder Gewerbeimmobilien in sogenannten Bauklassen (BAK) errichtet werden.

Die relevantesten Klassen sind die Folgenden:
Klasse 1:
   Außenwände Massiv (Mauerwerk, Beton)
   Dacheindeckung hart (z. B. Ziegel, Schiefer, Betonplatten, Asbestzementplatten, Metall, gesandete Dachpappe)
Klasse 2:
   Außenwände Stahl- oder Holzfachwerk mit Stein- oder Glasfüllung, Stahl- oder Stahlbetonkonstruktion mit Wandplattenverkleidung aus nichtbrennbarem Material (z. B. Profilblech, Asbestzement; kein Kunststoff)
   Dacheindeckung, hart (z. B. Ziegel, Schiefer, Betonplatten, Asbestzementplatten, Metall, gesandete Dachpappe)
Klasse 3:
   Außenwände, Holz, Holzfachwerk mit Lehmfüllung, Holzkonstruktion mit Verkleidung jeglicher Art, Stahl- oder Stahlbetonkonstruktion mit Wandplattenverkleidung aus Holz oder Kunststoff
   Dacheindeckung, weich (z. B. vollständige oder teilweise Eindeckung mit Holz, Ried, Schilf, Stroh u. ä.)
   Tritt ein Schaden ein, insbesondere ein sogenannter Wasserschaden, kann dies wiederum kategorisiert in zwei Weisen erfolgen. Zum einen kann es sich um eine Naturkatastrophe handeln, dass eben Niederschlagswasser von außen und/oder von innen in das Gebäude eindringt. Alternativ kann beispielsweise durch ein Leitungswasserschaden oder in sonstiger Weise Wasser von der Innenseite des Gebäudes eintreten.

Es gibt eine Vielzahl von Bauarten, die sich in der Konstruktion und den verwendeten Materialien unterscheiden. Hier sind die wichtigsten Bauarten von Gebäuden:
1. Massivbau
   Merkmale: Tragende Wände und Decken bestehen aus festen Materialien wie Stein, Beton oder Ziegel.
   Vorteile: Hohe Stabilität, Schallschutz, Brandschutz, gute Wärmespeicherung.
   Nachteile: Lange Bauzeit, schwerer Rückbau, teurer in der Ausführung.
   Beispiele: Wohnhäuser, Bürogebäude, öffentliche Gebäude.
2. Skelettbau (Stahlbau, Stahlbetonbau)
   Merkmale: Das tragende Gerüst besteht aus einem Stahlskelett oder Stahlbeton, während die Wände keine tragende Funktion haben und als nichttragende Fassade genutzt werden.
   Vorteile: Große Spannweiten möglich, flexible Raumaufteilung, schneller Bau.
   Nachteile: Schlecht in der Wärmespeicherung, erhöhter Korrosionsschutz bei Stahl notwendig.
   Beispiele: Wolkenkratzer, Hochhäuser, Industriehallen.
3. Holzbau
   Merkmale: Hauptkonstruktionsmaterial ist Holz, entweder als Vollholz, Leimholz oder in anderen Formen (z. B. Holzständerbauweise, Holzrahmenbauweise).
   Vorteile: Nachhaltigkeit, gute Wärmedämmung, schneller Bau.
   Nachteile: Anfällig für Feuchtigkeit und Schädlingsbefall, schlechter Brandschutz im Vergleich zu massiven Bauarten.
   Beispiele: Einfamilienhäuser, Ferienhäuser, Holzhütten.
4. Fertigbauweise (Modulbauweise)
   Merkmale: Vorfabrizierte Module oder Bauteile werden an der Baustelle zusammengesetzt.
   Vorteile: Schnelle Bauzeit, meist kostengünstiger, wenig Bauabfall.
   Nachteile: Begrenzte Flexibilität in der Gestaltung, abhängig von Transportmöglichkeiten.
   Beispiele: Fertighäuser, Bürocontainer, temporäre Bauten.
5. Mischbauweise
   Merkmale: Kombination verschiedener Materialien und Bauweisen, z. B. Holz und Stahl oder Massivbau mit Fertigbauelementen.
   Vorteile: Flexibilität bei Materialauswahl, Nutzung der Vorteile verschiedener Bauweisen.
   Nachteile: Komplexere Planung und Koordination der Baustelle.
   Beispiele: Modernes Wohn- und Bürogebäude.
6. Lehmbau
   Merkmale: Verwendung von Lehm oder lehmhaltigen Baustoffen für die Konstruktion.
   Vorteile: Nachhaltig, gute Wärmespeicherung, atmungsaktive Wände.
   Nachteile: Anfällig für Feuchtigkeit, nicht für alle Klimazonen geeignet.
   Beispiele: Traditionelle Gebäude in warmen, trockenen Regionen.
7. Fachwerkbau
   Merkmale: Holzskelettbauweise mit Gefachen aus Lehm, Ziegel oder anderen Materialien.
   Vorteile: Ästhetisch ansprechend, gute Kombination von Materialien.
   Nachteile: Aufwändig in der Pflege, eingeschränkte Wärmedämmung.
   Beispiele: Historische Gebäude, restaurierte Wohnhäuser.
8. Plattenbau
   Merkmale: Gebäude aus vorgefertigten Betonplatten, die auf der Baustelle zusammengefügt werden.
   Vorteile: Kostengünstig, schnelle Bauweise.
   Nachteile: Geringe architektonische Vielfalt, oft schlechte Schall- und Wärmedämmung.
   Beispiele: Sozialer Wohnungsbau, Bürogebäude.
9. Containerbau
   Merkmale: Verwendung von Containern als Basiselemente für die Gebäudestruktur.
   Vorteile: Mobilität, schnelle Errichtung, günstige Bauweise.
   Nachteile: Eingeschränkte Gestaltungsmöglichkeiten, oft temporär.
   Beispiele: Temporäre Bürogebäude, mobile Wohneinheiten.
10. Ökologische Bauweise
   Merkmale: Verwendung von nachhaltigen, ökologischen Materialien wie Holz, Lehm, Stroh, Recyclingmaterialien.
   Vorteile: Umweltfreundlich, gesundes Raumklima, Energieeinsparung.
   Nachteile: Teils höhere Baukosten, spezielles Know-how nötig.
   Beispiele: Passivhäuser, Niedrigenergiehäuser, Earthships.
11. Massivholzbau
   Merkmale: Verwendung von Massivholzplatten oder -balken, die miteinander verbunden werden.
   Vorteile: Umweltfreundlich, gute Wärmedämmung, schnelle Bauzeit.
   Nachteile: Kostenintensiver als herkömmlicher Holzbau, spezieller Brandschutz erforderlich.
   Beispiele: Mehrfamilienhäuser, öffentliche Gebäude.
   Diese Bauarten können je nach Region, Klima und Vorlieben der Bauherren variieren. Die Wahl der Bauart hängt oft von Faktoren wie Kosten, Ästhetik, Nachhaltigkeit und Verfügbarkeit der Materialien ab.

Den oberflächlichen Schaden, mithin das stehende Wasser, hat man zumeist schnell beseitigt. Beispielsweise kann ein mit Wasser vollgelaufener Keller abgepumpt werden.

Schwerwiegender ist die danach anstehende Trocknung sowie der mehrere Tage oder Wochen dauernde Trocknungsprozess von Estrich und Wänden. Das Wasser zieht zum einen in den Estrich bzw. Boden des Gebäudes ein. Zum anderen jedoch zieht das Wasser auch aufgrund sogenannter Kapillarwirkung an der Wand hoch. Hier muss eine technische Trocknung erfolgen, damit zum einen der Trocknungsvorgang möglichst effizient und zeitnah erfolgt und weitergehende Folgeschäden, beispielsweise Schimmelbildungen oder Substanzschäden an dem Gebäude, aufgrund von Wassereinlagerungen in den Wänden bzw. Gebäudeteilen vorgebeugt wird bzw. diese beseitigt werden können.

Im weiteren Stand der Technik hat sich daher die sogenannte technische Trocknung etabliert. Hier wird von einer Innenseite des Gebäudes eine Konvektionsströmung erzeugt. Eine solche Konvektionsströmung wird durch Belüftungsgeräte erzeugt. Innerhalb des Gebäudes, konkret innerhalb eines Raumes, wird dann ein weiteres Trocknungsgerät aufgestellt. Hierbei handelt es sich um einen Wasser aus der Luft abscheidenden Kondensator. Ein solches Trocknungsgerät wird auch Bautrockner bzw. Luftentfeuchter genannt.

Im Stand der Technik sowie nach Wissenschaft und Technik haben sich weitere aufwendige Trocknungsverfahren etabliert. Beispielsweise wird über ein entsprechendes Gebläse bzw. ein Belüftungsgerät Luft in bzw. unterhalb eines Estrichs eingebracht. Bei der Luft handelt es sich bevorzugt um bereits getrocknete Luft (Prozessluft), die dann durch eine entsprechende Konvektionsströmung, die in den Wänden bzw. Böden enthaltene Feuchtigkeit aufnehmen und wiederum dem Luftentfeuchter zuführen, so dass die Feuchtigkeit in Form von Wasser aus der Luft ausgeschieden werden kann.

Eine solche Trocknungsanordnung ist beispielsweise aus DE 10 2012 007 273 A1 bekannt.

Bei der technischen Trocknung wird zumeist innerhalb eines Raumes eine solche Trocknungsanordnung, aufweisend ein Belüftungsgerät sowie ein Luftentfeuchter, aufgestellt. Diese Geräte laufen dann mehrere Tage oder Wochen im Dauerbetrieb, um entsprechend eine Luftzirkulation bzw. Konvektionsströmung bereitzustellen, die dann die in den jeweiligen Gebäudeteilen enthaltende Feuchtigkeit beispielsweise im Putz oder der Mauer aufnehmen und durch den Luftentfeuchter aus der Luft abzuscheiden.

Aus der CH 709 716 B1 ist ferner ein Traggestell bekannt. Auf dem Traggestell kann ein Gebläsegerät abgestellt werden.

Aus der US 11 788 674 B2 ist eine rotierende Platte bekannt, die als Ständer ausgebildet ist und um 360° rotiert, mit einem Stromanschluss für ein elektrisches Gerät.

Aufgabe der vorliegenden Erfindung ist es, mit einfachem technischen Aufwand, bevorzugt zum Nachrüsten, eine Möglichkeit aufzuzeigen, die technische Trocknung deutlich effizienter zu gestalten, so dass ein schnellerer Trocknungsvorgang ermöglicht wird.

Die zuvor genannte Aufgabe wird erfindungsgemäß mit einer Bautrocknungsanordnung gemäß den Merkmalen im Anspruch 1 gelöst.

Ein verfahrenstechnischer Teil der Aufgabe wird mit den Merkmalen im Anspruch 9 gelöst.

Bevorzugte Ausgestaltungsvarianten der vorliegenden Erfindung sind in den abhängigen Ansprüchen beschrieben.

Die Bautrocknungsanordnung ist insbesondere für Immobilien geeignet. Besonders bevorzugt wird damit eine technische Trocknung durchgeführt. Insbesondere handelt es sich um Immobilien in Steinbauweise mit Putzen auf Mineralbasis, beispielsweise Gipsputzen oder ähnlichem. Es können jedoch auch andere Räumlichkeiten bzw. Immobilien mit der erfindungsgemäßen Bautrocknungsanordnung behandelt werden.

Die Bautrocknungsanordnung sieht ein Belüftungsgerät vor. Bei dem Belüftungsgerät handelt es sich bevorzugt um einen Ventilator bzw. einen Lüfter. Hierbei erzeugt ein Propeller einen Luftstrom, der auch nachfolgend als Konvektionsströmung bezeichnet wird. Das Belüftungsgerät ist auf einem Ständer angeordnet. Das Belüftungsgerät weist einen elektrischen Stromanschluss auf, mithin ist ein elektrischer Stecker zu verstehen, den das Belüftungsgerät aufweist, um mit Strom versorgt zu werden und die Luftströmung zu erzeugen.

Erfindungsgemäß zeichnet die Bautrocknungsanordnung nunmehr dadurch aus, dass der Ständer eine rotierende Platte aufweist. Die rotierende Platte rotiert um 360°. Die Platte ist im Wesentlichen horizontal auf dem Ständer angeordnet. 360° bedeutet, die Platte kann mindestens einmal, bevorzugt mehrfach, insbesondere unendlich viele Male um ihre eigene Achse vollständig drehen. Auf der rotierenden Platte ist ein Stromanschluss vorgesehen für das Belüftungsgerät. Das Belüftungsgerät ist auf der rotierenden Platte angeordnet. Das Belüftungsgerät kann auch Trocknungsgerät genannt werden.

Erfindungsgemäß wird hierdurch nachfolgend beschriebener Vorteil erreicht.

In einem Raum eines Gebäudes bzw. einer Immobilie kann somit durch die Platzierung, insbesondere zentrale Platzierung des Ständers mit darauf angeordnetem Belüftungsgerät eine umlaufende Konvektionsströmung in dem gesamten Raum erzeugt werden. Normalerweise wird ein solches Belüftungsgerät statisch aufgestellt und erzeugt eine Luftströmung auf eine Wand. Die Luftströmung verteilt sich dann zwar im gesamten Raum, ist jedoch mit ihrem Hauptstrom und damit mit ihrer Intensität in einer Direktion mithin einer Richtung ausgehend von dem Lüftungsgerät festgelegt. Effizient wird somit die in dem Lüftungsschatten bzw. von der Lüftung überströmten Bereich des Bodens sowie die direkt angeströmte Wand getrocknet, in dem ein Luftstrom hierauf gelenkt wird und somit eine Konvektion erzeugt, mithin werden die in der Wand und dem Boden enthaltende Feuchtigkeit durch die Konvektionsströmung aufgenommen.

Weiterhin ist dann gemäß der erfindungsgemäßen Bautrocknungsanordnung in dem Raum ein Luftentfeuchter angeordnet, welcher die Feuchtigkeit aus der Luft abscheidet.

Erfindungsgemäß wird die Luftströmung in allen Bereichen des Raumes besser verteilt durch die 360° Rotierbarkeit der Platte. Das Belüftungsgerät erreicht somit umlaufend alle Wände des Raumes und kann somit den Luftstrom deutlich besser verteilen, so dass eine gleichmäßigere jedoch auch effizientere Konvektionsströmung innerhalb des Raumes erzeugt wird. In der Folge kann mehr Feuchtigkeit aufgenommen werden, was eine effizientere und schnellere Trocknung ermöglicht. Gleichzeitig findet die Trocknung gleichmäßiger statt, so dass ebenfalls die Trocknung effizienter durchgeführt wird. Die Rotation der Platte ist in vier Sektoren unterteilt. Ein Raum ist zumeist viereckig. Ein Sektor entspricht somit 90°. Die Mitte eines Sektors ist jeweils eine Raumecke. Erfinderungsgemäß ist vorgesehen, dass die Rotationsgeschwindigkeit bis zur Hälfte eines Sektors abnimmt und nach Erreichen der Hälfte des Sektors wiederum zunimmt. Bei Eintritt in den neuen Sektor nimmt dann die Rotationsgeschwindigkeit bis zur Hälfte wieder ab und nach Erreichen der Mitte des zweiten Sektors nimmt die Rotationsgeschwindigkeit wieder zu. Hierdurch wird erreicht, dass ein annähernd gleicher Belüftungsstrom über die Wände eines Raumes streift, wie nachfolgend noch weiter beschrieben.

Der Ständer weist ein unteres Gehäuse auf, wobei in dem Gehäuse ein Antriebsmotor für die Rotation untergebracht ist. Das Gehäuse hat insbesondere eine runde Außenkontur, so dass die Rotationsbewegung durchgeführt wird. Bevorzugt ist der Durchmesser größer 40 cm, insbesondere größer 50 cm ausgebildet, ganz besonders bevorzugt jedoch kleiner 100 cm. Hierdurch wird es ermöglicht, insbesondere handelsübliche bzw. bei Trocknungsfirmen vorhandene Belüftungsgeräte mit dem erfindungsgemäßen Ständer nachzurüsten.

Insbesondere ist als Stromanschluss auf der rotierenden Platte ein Schukostecker mit 220 V- bzw. 230 V-Anschluss vorhanden. Unterhalb der Platte kann beispielsweise ein Schleifring oder auch sonstiger drehbarer Kontakt vorhanden sein, so dass der Stromanschluss auf der rotierenden Platte mit elektrischer Energie bei unbegrenzter Umdrehungszahl versorgt wird.

Der Ständer selbst weist ein Eigengewicht von mindestens 15 kg, insbesondere mehr als 20 kg auf. Hierdurch ist eine Kippsicherheit des Ständers vorgegeben.

Besonders bevorzugt weist der Ständer an seiner äußeren Mantelfläche des runden Gehäuses einen Unterfahrschutz auf. Somit wird es ermöglicht, dass auch im weiteren Einsatz der Bautrocknungsanordnung über mehrere Tage und parallel ausgeführter Bauarbeiten die Rotationsbewegung nicht behindert wird, durch beispielsweise versehentlich unter das Gehäuse verbrachte Gegenstände.

Weiterhin besonders bevorzugt ist der Ständer auf Rollen gelagert. Die Rollen selbst sind bevorzugt arretierbar ausgebildet. Bevorzugt können auch die Rollen nach innen in den Ständer eingeklappt werden, sofern der Ständer am gewünschten Aufstellort positioniert ist.

Weiterhin besonders bevorzugt weist der Ständer einen elektrischen Sicherungsautomaten für den Stromanschluss auf. Alternativ oder ergänzend weist der Ständer einen elektrischen Sicherungsautomaten für den Antriebsmotor der Rotation auf. Ferner alternativ oder ergänzend weist der Ständer, insbesondere das Gehäuse des Ständers, einen elektrischen Stecker zur Bestromung des Gehäuses für den Antriebsmotor sowie zur Weiterleitung über den drehbaren Kontakt für den elektrischen Anschluss auf der rotierbaren Platte auf.

Bei einer ergänzenden Ausführungsvariante weist der Ständer eine Steuerungsregelung auf, mit welcher der Antriebsmotor betrieben wird. Denkbar ist insbesondere eine permanente Rotationsbewegung mit gleichbleibender Rotationsgeschwindigkeit. Jedoch kann auch ein nachfolgend weiterhin beschriebenes Verfahren für den Ständer verwendet werden.

Hierzu ist insbesondere als erfindungsgemäßes Verfahren ein Belüftungsgerät auf der rotierenden Platte in Betrieb, wobei die Platte um 360° mehrfach, insbesondere unendlich, rotierbar ist. Mithin ist die Rotierbewegung um die eigene Achse nicht begrenzt und kann beliebig Male wiederholt werden, mithin ein Dauereinsatz von mehreren hunderttausenden Umdrehungen möglich. Somit kann ein Raum, insbesondere ein rechteckförmiger Raum, in welchem sich das Belüftungsgerät auf dem Ständer befindet, umlaufend mit einem Luftstrom beaufschlagt werden. Der Luftstrom wird als Konvektionsströmung bezeichnet. Ein Luftentfeuchter kann dann separat von dem Belüftungsgerät in dem Raum platziert werden. Durch die umlaufend erzeugte Konvektionsströmung ist ein hinreichender Austausch von feuchter Luft über den Luftentfeuchter zu getrockneter Luft möglich.

Das Verfahren sieht vor, dass die Rotationsbewegung von 360° in vier Sektoren zu jeweils 90° unterteilt wird. Die Rotationsgeschwindigkeit variiert. Sie nimmt jeweils bis zur Hälfte eines Sektors ab und nach Erreichen der Hälfte des Sektors wieder zu. Bei Eintritt in den neuen Sektor nimmt die Rotationsgeschwindigkeit wieder bis zu Erreichen der Hälfte des Sektors ab und bei Überschreiten der Hälfte des zweiten Sektors nimmt die Rotationsgeschwindigkeit wieder zu, fortgesetzt auf den dritten und vierten Sektor. Bei Erreichen wiederum des ersten Sektors beginnt die Variation der Rotationsgeschwindigkeit erneut.

Hierdurch wird folgender erfindungswesentlicher Vorteil erreicht. Räume sind zumeist quadratisch oder rechteckig ausgebildet. Ein erfindungsgemäßes Belüftungsgerät wird zumeist zentral in dem Raum angeordnet. Bei 360° umlaufender Rotation nimmt somit der Abstand zu einer jeweiligen Wand an der Wandmitte sein Minimum ein. In einer Wandecke ist der Abstand maximal sowie die mit dem Luftstrom zu überstreichende Fläche ebenfalls vor und nach Erreichen der Ecke in einem Maximum. Wird nunmehr der Sektor so ausgerichtet, dass die Raumecke sich in der Hälfte des Sektors befindet, so wird aufgrund geringerer Rotationsgeschwindigkeit zeitlich gesehen ein intensiverer Luftstrom in die jeweilige Raumecke eingetragen. Bei Durchschreiten der Ecke nimmt dann die Rotationsgeschwindigkeit wieder zu, so dass bei Erreichen etwa der Wandmitte die Rotationsgeschwindigkeit am höchsten ist. Die Wandmitte wird somit mit einem relativ gesehen, geringeren Luftstrom bzw. in schnellerer Zeit überschritten. Im Ergebnis können somit wiederum die Effektivität der Trocknung gesteigert werden, da alle Bereiche eines rechteckigen bzw. quadratischen Raumes mit einer ähnlichen Luftströmungsmenge beaufschlagt werden, so dass die Trocknung homogenisiert und/oder schneller durchgeführt wird. Aufgrund einer Steuerungsregelung kann beispielsweise die Rotation des Ständers jedoch wiederum geändert werden, so dass dieser bei Bedarf mit einer konstanten Rotationsgeschwindigkeit arbeitet.

Weitere Vorteile, Merkmale, Eigenschaften der vorliegenden Erfindung sind in den nachfolgenden Figuren beschrieben. Diese dienen dem einfachen Verständnis der Erfindung. Alle Ausführungsbeispiele können beliebig untereinander kombiniert werden ohne den Rahmen der Erfindung zu verlassen. Es zeigen
- Figur 1: eine Bautrocknungsanordnung in einem Raum,
- Figur 2: das Funktionsprinzip und
- Figur 3: eine Querschnittsansicht durch einen erfindungsgemäßen Ständer.

In den Figuren werden für gleiche oder ähnliche Bauteile dieselben Bezugszeichen verwendet, auch wenn eine wiederholte Beschreibung aus Vereinfachungsgründen entfällt.

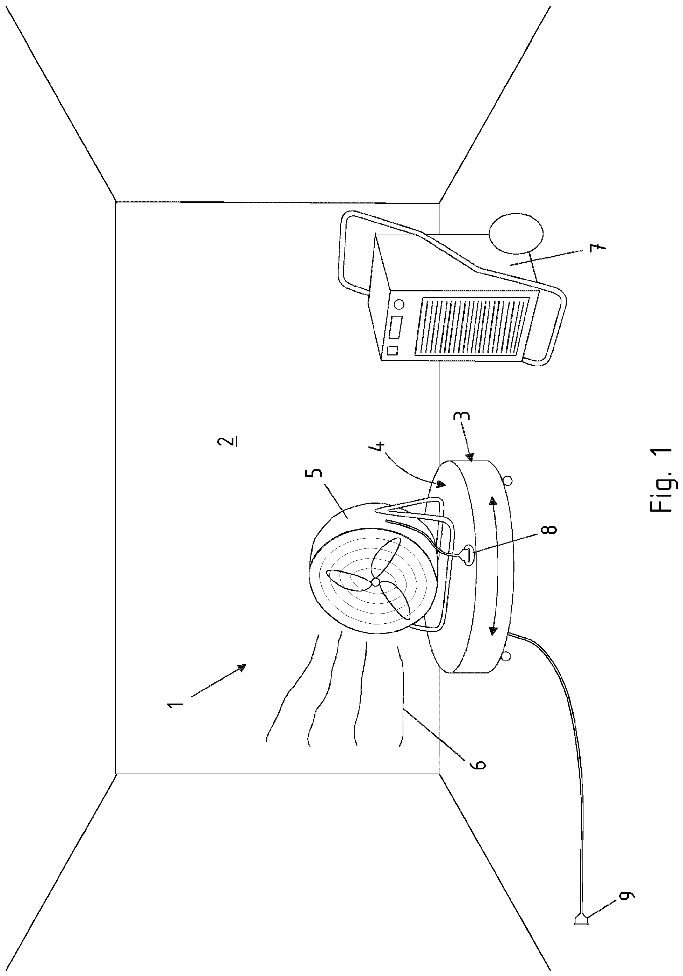

Figur 1 zeigt eine Bautrocknungsanordnung 1. Hierzu ist in einem Raum 2 einer Immobilie ein Ständer 3 mit einer rotierenden Scheibe bzw. Platte 4 aufgestellt. Auf der Platte 4 ist ein Belüftungsgerät 5 angeordnet. Hierdurch wird eine Konvektionsströmung 6 erzeugt und im Raum 2 verteilt. Ferner ist in dem Raum 2 ein Lufttrockner 7 angeordnet. Damit das Belüftungsgerät 5 mit Strom versorgt ist, ist auf der Platte 4 ein Stromanschluss 8 angeordnet. Der Stromanschluss 8 ist mittels unterhalb der Platte 4 und in dem Gehäuse befindlicher Kontakte drehbar mit dem Gehäuse verbunden, so dass selbst bei einer Drehung von mehr als 360° der Stromanschluss 8 vorhanden ist. In der Ausgestaltungsvariante dargestellten Figur 1 ist somit die obere Platte 4 rotierend und die bei Bezugszeichen 3 außen umlaufende Mantelfläche mit der Platte einteilig verbunden. Die Rotationsbewegung der Platte führt auch die Mantelfläche aus. Der Ständer, welcher beispielsweise auf Rollen oder Standfüßen gelagert ist, befindet sich unterhalb der rotierenden Platte und kann als unteres Gehäuse bezeichnet werden. Der obere Teil und die äußere Mantelfläche bei Bezugszeichen 3 drehen sich somit. Es kann jedoch auch vorgesehen sein, dass der Ständer bzw. das untere Gehäuse des Ständers, welches auf dem Boden steht, feststeht und nur die obere Platte 4 rotiert. Die umlaufende Mantelfläche bei Bezugszeichen 3 wäre in dem Fall stehend und die Platte 4 würde eine Relativbewegung als Rotationsbewegung demgegenüber ausführen.

Das Gehäuse selbst ist wiederum mit einem Stecker 9 versehen, so dass es beispielsweise hier angedeutet, in einem Stromanschluss 8 der Immobilie bzw. des Raumes 2 angeschlossen werden kann.

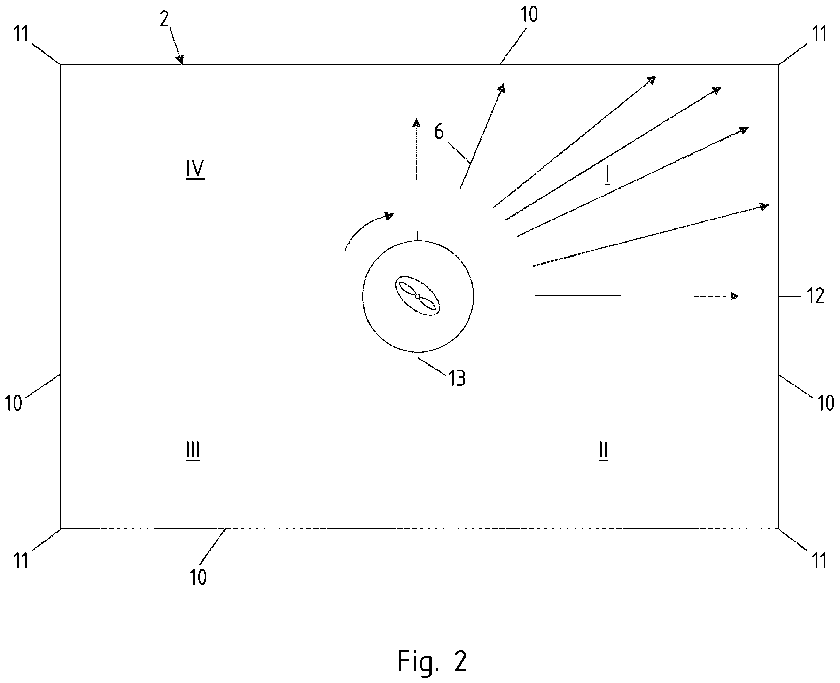

Figur 2 zeigt das Funktionsprinzip. Hierbei ist der Raum 2 gezeigt. Der Raum 2 weist vier Wände 10 auf mit vier Ecken 11. Jeweils beim Durchlaufen einer Ecke 11 ist der Weg, den die Konvektionsströmung 6 zurücklegen muss, länger sowie bei im Falle gleichbleibender Rotationsgeschwindigkeit die relative Zeit, mit welcher die jeweilige Fläche der Wand 10 bis zur Ecke 11 überstrichen wird, kürzer.

Hier setzt die vorliegende Erfindung an, so dass die Rotationsgeschwindigkeit der Platte 4 zum Durchlaufen der Ecke 11 geringer wird, in der Ecke 11 am geringsten ist und nach Passieren der Ecke 11 wiederum zunimmt, wobei jeweils bei einer Wandmitte 12 die Rotationsgeschwindigkeit am höchsten ist. Ist die Wandmitte 12 passiert, nimmt die Rotationsgeschwindigkeit zur nächsten Ecke 11 wieder ab und nach Passieren der Ecke 11 wieder zu bis zum folgenden Wandmittelpunkt. Dies setzt sich dann fort. Somit ist der Raum 2 in vier Sektoren I bis IV eingeteilt.

Eine Ecke 11 des Raumes ist jeweils die Hälfte eines Sektors. Damit das Gerät ausgerichtet werden kann, sind Markierungen 13 vorgesehen, die beispielsweise an dem Gehäuse angeordnet sind. Das Gehäuse wird somit mit den Markierungen 13 auf die jeweilige Raummitte und insbesondere Wandmitte 12 ausgerichtet. Dadurch sind die einzelnen Sektoren von jeweils 90° eingeteilt, so dass bei anschließendem Ablauf einer vorprogrammierten Steuerung die Geschwindigkeit zur Ecke 11 hin abnimmt und jeweils zur Wandmitte 12 zunimmt. Die Effektivität des mit der erfindungsgemäßen Bautrocknungsanordnung 1 durchlaufenden Raumes 2 ist somit gesteigert.

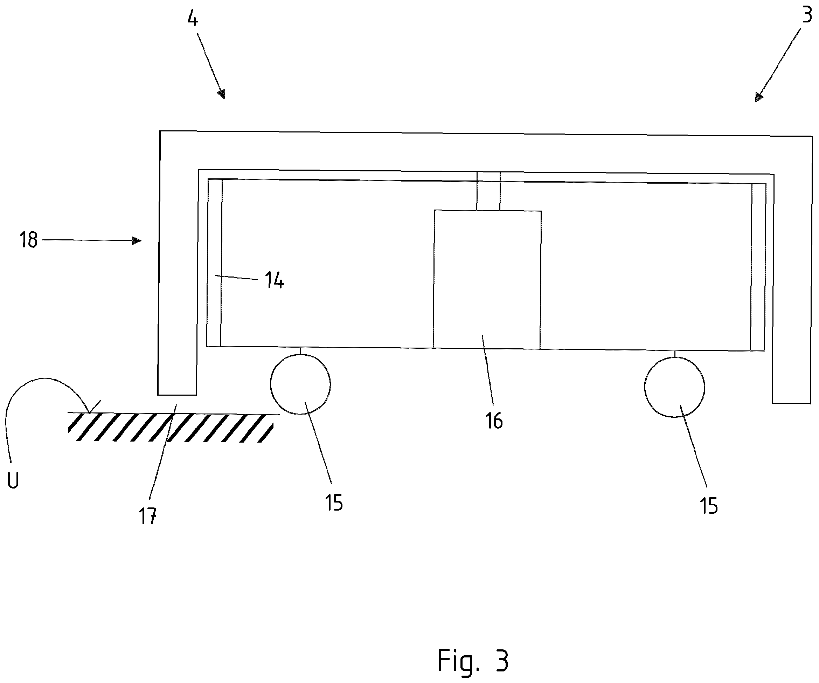

Figur 3 zeigt eine Querschnittsansicht durch einen erfindungsgemäßen Ständer 3. Der Ständer 3 weist einen innenliegenden Rahmen 14 auf. Der Rahmen 14 ist auf Rollen 15 gelagert. In dem Rahmen 14 ist ein entsprechender Elektromotor 16 angeordnet. Der Elektromotor 16 ist unmittelbar bzw. mittelbar mit der rotierenden Platte 4 gekoppelt. Die Platte 4 weist eine äußere Mantelfläche 18 auf. Die Mantelfläche 16 erstreckt sich bevorzugt über eine Höhe des Ständers 3. Gegenüber einem Untergrund U verbleibt ein minimaler Spalt 17. Die Mantelfläche bietet somit den Vorteil, dass zum Aufstellen und im Betrieb des Ständers 3 nichts unterhalb des Ständers 3 unbeabsichtigt rutschen kann. Hierdurch wird eine Fehlfunktion oder eine Störung bei der Rotation des Ständers 3 vermieden.

### Bezugszeichen:

- 1 -: Bautrocknungsanordnung
- 2 -: Raum
- 3 -: Ständer
- 4 -: Scheibe bzw. Platte
- 5 -: Belüftungsgerät
- 6 -: Konvektionsströmung
- 7 -: Lufttrockner
- 8 -: Steckdose oder elektrischer Stromanschluss
- 9 -: Stecker
- 10 -: Wand
- 11 -: Ecke
- 12 -: Wandmitte
- 13 -: Markierung
- 14 -: Rahmen
- 15 -: Rollen
- 16 -: Elektromotor
- 17 -: Spalt
- 18 -: Mantelfläche

- U -: Untergrund

## Patentansprüche

1. Bautrocknungsanordnung (1), insbesondere für Immobilien, aufweisend ein Belüftungsgerät (5), welches auf einem Ständer (3) angeordnet ist, wobei das Belüftungsgerät (5) einen elektrischen Stromanschluss (8) aufweist, wobei der Ständer (3) eine rotierende Platte (4) aufweist, welche um 360° rotierbar ist, **dadurch gekennzeichnet, dass** auf der rotierenden Platte (4) ein Stromanschluss (8) für das Belüftungsgerät (5) vorhanden ist und dass die Rotation in vier Sektoren zu jeweils 90° unterteilt ist, dergestalt, dass die Rotationsgeschwindigkeit bis zur Hälfte eines Sektors abnimmt und nach Erreichen der Hälfte des Sektors zunimmt und bei Eintritt in den neuen Sektor wieder bis zu dessen Hälfte abnimmt und dann wieder zunimmt.

2. Bautrocknungsanordnung (1) nach Anspruch 1, **dadurch gekennzeichnet, dass** der Ständer (3) ein unteres Gehäuse aufweist, welches einen Antriebsmotor für die Rotation aufweist, wobei das Gehäuse insbesondere einen Durchmesser von bevorzugt mehr als 40 cm, insbesondere mehr als 50 cm aufweist.

3. Bautrocknungsanordnung (1) nach einem der vorgenannten Ansprüche, **dadurch gekennzeichnet, dass** auf der rotierenden Platte (4) Aufnahmen für das Belüftungsgerät (5) ausgebildet sind und/der das Befestigungsmittel auf der rotierenden Platte (4) angeordnet sind.

4. Bautrocknungsanordnung (1) nach einem der vorgenannten Ansprüche, **dadurch gekennzeichnet, dass** der Ständer mehr als 15 kg, insbesondere mehr als 20 kg wiegt.

5. Bautrocknungsanordnung (1) nach einem der vorgenannten Ansprüche, **dadurch gekennzeichnet, dass** der Ständer (3) ein in Draufsicht rundes Gehäuse aufweist, wobei das Gehäuse an seiner Mantelfläche einen Unterfahrschutz aufweist.

6. Bautrocknungsanordnung (1) nach einem der vorgenannten Ansprüche, **dadurch gekennzeichnet, dass** der Ständer (3) auf Rollen gelagert ist, wobei die Rollen bevorzugt arretierbar sind.

7. Bautrocknungsanordnung (1) nach einem der vorgenannten Ansprüche, **dadurch gekennzeichnet, dass** der Ständer (3) einen elektrischen Sicherungsautomaten für den Stromanschluss aufweist und/oder dass der Ständer (3) einen elektrischen Sicherungsautomaten für den Antriebsmotor aufweist und/oder dass der Ständer (3), insbesondere das Gehäuse des Ständers (3) einen elektrischen Stecker (9) zur Bestromung des Gehäuses aufweist.

8. Bautrocknungsanordnung (1) nach einem der vorgenannten Ansprüche, **dadurch gekennzeichnet, dass** der Ständer (3) eine Steuerungsregelung aufweist, mit welcher der Antriebsmotor betrieben wird.

9. Verfahren zum Betreiben einer Bautrocknungsanordnung (1) nach Anspruch 1, wobei ein Belüftungsgerät (5) auf der rotierenden Platte (4) in Betrieb ist und die Platte (4) um 360° rotiert, dergestalt, dass ein Raum (2), in welchem sich das Belüftungsgerät (5) befindet umlaufend mit einem Luftstrom beaufschlagt, **dadurch gekennzeichnet, dass** die Rotation in vier Sektoren zu jeweils 90° unterteilt wird, wobei jeweils die Rotationsgeschwindigkeit bis zur Hälfte eines Sektors abnimmt und nach Erreichen der Hälfte des Sektors zunimmt und bei Eintritt in den neuen Sektor wieder bis zu dessen Hälfte abnimmt und dann wieder zunimmt.

## Claims

1. A building-drying arrangement (1), in particular for buildings, comprising a ventilation device (5) arranged on a stand (3), wherein the ventilation device (5) has an electrical power connection (8), and wherein the stand (3) has a rotatable plate (4) which is rotatable through 360°, **characterised in that** a power connection (8) for the ventilation device (5) is provided on the rotatable plate (4), and **in that** the rotation is divided into four sectors of 90° each, such that the rotational speed decreases until halfway through a sector and increases after the halfway point has been reached, and, upon entry into the next sector, decreases again until halfway through that sector and then increases again.

2. The building-drying arrangement (1) according to claim 1, **characterised in that** the stand (3) has a lower housing comprising a drive motor for the rotation, wherein the housing in particular has a diameter of preferably more than 40 cm, in particular more than 50 cm.

3. The building-drying arrangement (1) according to any one of the preceding claims, **characterised in that** receptacles for the ventilation device (5) are formed on the rotatable plate (4) and/or fastening means are arranged on the rotatable plate (4).

4. The building-drying arrangement (1) according to any one of the preceding claims, **characterised in that** the stand weighs more than 15 kg, in particular more than 20 kg.

5. The building-drying arrangement (1) according to any one of the preceding claims, **characterised in that** the stand (3) has a housing that is circular in plan view, wherein the housing is provided, on its circumferential surface, with a protective device configured to prevent objects from passing underneath the housing.

6. The building-drying arrangement (1) according to any one of the preceding claims, **characterised in that** the stand (3) is mounted on castors, wherein the castors are preferably lockable.

7. The building-drying arrangement (1) according to any one of the preceding claims, **characterised in that** the stand (3) has an electrical circuit breaker for the power connection and/or the stand (3) has an electrical circuit breaker for the drive motor and/or the stand (3), in particular the housing of the stand (3), has an electrical plug (9) for supplying electrical power to the housing.

8. The building-drying arrangement (1) according to any one of the preceding claims, **characterised in that** the stand (3) has a control system by means of which the drive motor is operated.

9. A method for operating a building-drying arrangement (1) according to claim 1, wherein a ventilation device (5) arranged on the rotatable plate (4) is in operation and the plate (4) rotates through 360°, such that an air flow is directed successively in different directions around the room (2) in which the ventilation device (5) is located, **characterised in that** the rotation is divided into four sectors of 90° each, wherein the rotational speed decreases in each sector until the halfway point is reached and then increases, and, upon entry into the next sector, decreases again until the halfway point of that sector is reached and then increases again.

## Revendications

1. Dispositif de séchage de bâtiments (1), notamment destiné aux immeubles, comprenant un dispositif de ventilation (5) disposé sur un support (3), le dispositif de ventilation (5) comportant un raccordement électrique d'alimentation (8), et le support (3) comportant une plaque rotative (4) apte à effectuer une rotation de 360°, **caractérisé en ce qu'**un raccordement électrique d'alimentation (8) destiné au dispositif de ventilation (5) est prévu sur la plaque rotative (4), et **en ce que** la rotation est divisée en quatre secteurs de 90° chacun, la vitesse de rotation diminuant jusqu'à mi-parcours de chaque secteur, puis augmentant après le franchissement de ce point médian, avant de diminuer à nouveau jusqu'à mi-parcours du secteur suivant, puis d'augmenter à nouveau.

2. Dispositif de séchage de bâtiments (1) selon la revendication 1, **caractérisé en ce que** le support (3) comporte un boîtier inférieur comprenant un moteur d'entraînement destiné à assurer la rotation, le boîtier présentant notamment un diamètre de préférence supérieur à 40 cm, en particulier supérieur à 50 cm.

3. Dispositif de séchage de bâtiments (1) selon l'une quelconque des revendications précédentes, **caractérisé en ce que** des logements destinés au dispositif de ventilation (5) sont ménagés sur la plaque rotative (4) et/ou des moyens de fixation sont disposés sur la plaque rotative (4).

4. Dispositif de séchage de bâtiments (1) selon l'une quelconque des revendications précédentes, **caractérisé en ce que** le support pèse plus de 15 kg, en particulier plus de 20 kg.

5. Dispositif de séchage de bâtiments (1) selon l'une quelconque des revendications précédentes, **caractérisé en ce que** le support (3) comporte un boîtier de forme circulaire en vue de dessus, ledit boîtier étant muni, sur sa surface périphérique, d'un dispositif de protection empêchant des objets de passer sous le boîtier.

6. Dispositif de séchage de bâtiments (1) selon l'une quelconque des revendications précédentes, **caractérisé en ce que** le support (3) est monté sur des roulettes, lesdites roulettes étant de préférence verrouillables.

7. Dispositif de séchage de bâtiments (1) selon l'une quelconque des revendications précédentes, **caractérisé en ce que** le support (3) comporte un disjoncteur électrique pour le raccordement électrique d'alimentation et/ou un disjoncteur électrique pour le moteur d'entraînement et/ou le support (3), notamment le boîtier du support (3), comporte une fiche électrique (9) destinée à alimenter électriquement le boîtier.

8. Dispositif de séchage de bâtiments (1) selon l'une quelconque des revendications précédentes, **caractérisé en ce que** le support (3) comporte un système de commande au moyen duquel le moteur d'entraînement est actionné.

9. Procédé de fonctionnement d'un dispositif de séchage de bâtiments (1) selon la revendication 1, dans lequel un dispositif de ventilation (5) disposé sur la plaque rotative (4) est en fonctionnement et la plaque (4) effectue une rotation de 360°, de sorte qu'un flux d'air est dirigé successivement dans différentes directions autour de la pièce (2) dans laquelle se trouve le dispositif de ventilation (5), **caractérisé en ce que** la rotation est divisée en quatre secteurs de 90° chacun, la vitesse de rotation diminuant, dans chaque secteur, jusqu'à atteindre le point médian, puis augmentant et, lors de l'entrée dans le secteur suivant, diminuant à nouveau jusqu'à atteindre le point médian de ce secteur, puis augmentant à nouveau.
